# EUROPEAN PATENT APPLICATION

(11) **EP 4 009 095 A1**
(43) Date of publication of application: **08.06.2022**
(21) Application number: 20211258.7
(22) Date of filing: 02.12.2020
(51) Int. Cl.: G02B 21/00, G02B 21/18, G02B 21/36, G02B 21/22

(54) **HYBRID MICROSCOPE**

(71) Applicant: Leica Instruments (Singapore) Pte. Ltd., 608924 Singapore (SG)
(72) Inventor: GÜNTERT, Michael, 9435 Heerbrugg (CH); WEIGER, Ulrich, 9462 Montlingen (CH)
(74) Representative: 2SPL Patentanwälte PartG mbB

(57) **Abstract**

Various examples relate to a hybrid medical microscope setup, and in particular to a microscope and a corresponding method. The microscope comprises a first light path configured to guide light from an objective of the microscope towards an eyepiece of the microscope. The microscope comprises a display device configured to output a visual representation of image data captured by two image sensor assemblies of the microscope. The image data is based on a portion of the light that is guided via the first light path. The microscope comprises a second light path configured to guide the visual representation of the image data towards the eyepiece. The microscope comprises an optical element, configured to provide the light guided via the first light path and/or the visual representation of the image data guided via the second light path to the eyepiece. By including the optical element that can be used to select one of the digital or optical view, or that can be used to overlay the digital image over the optical view, a hybrid viewfinder concept is provided that overcomes the drawbacks of previous systems.

## Description

### Technical field

Various examples relate to a hybrid medical microscope setup, and in particular to a microscope and a corresponding method.

### Background

For various neuro-surgical approaches, it is recommended to use the microscope in combination with other devices in the operating room. Data of these additional modalities are of importance to the surgeon and may be seen at the same time as the microscopic view.

In other systems, a beam splitter may be used to include an image overlay by inserting the overlay into the optical path of the microscope. Providing an image overlay with the help of a beam splitter requires very bright displays to still be visible in the surgeon's view. Also, due to the construction of the optical paths, the image overlay may be recorded with a video system. Therefore, the display refresh rate may have to be synchronized with the camera time to avoid stroboscopic effect on the video stream. Also, in such an implementation, the overlay may disturb fluorescence detection. In various implementations, such a system results in a large size of the microscope assembly.

### Summary

There may be a desire for providing an improved concept for implementing a hybrid view in medical microscope.

This desire is addressed by the subject-matter of the independent claims.

Various embodiments of the present disclosure are based on the finding, that the construction of medical microscopes that seek to provide a hybrid view (i.e. an optical view and a digital view) on a sample can be improved by using an optical element that is placed close to the optical/hybrid eyepiece to provide the digital or hybrid view to the user. For example, a tiltable mirror can be used to provide either the optical view or the digital view. With a movable mirror, the surgeon has the possibility to switch between a pure optical view or a full digital view. Alternatively, a beam splitter that is placed in the optical path after a portion of the light is branched off towards the image sensor(s) can be used to provide a hybrid view, in which a digital image is overlaid over the optical image, without accommodating disturbances that are caused by recording the overlay together with the optical view. Both implementations provide an improved concept for a hybrid view via eyepieces of a microscope.

Various embodiments of the present disclosure provide a microscope comprising a first light path configured to guide light from an objective of the microscope towards an eyepiece of the microscope. The microscope comprises a display device configured to output a visual representation of image data captured by two image sensor assemblies of the microscope. The image data is based on a portion of the light that is guided via the first light path. The microscope comprises a second light path configured to guide the visual representation of the image data towards the eyepiece. The microscope comprises an optical element, configured to provide the light guided via the first light path and/or the visual representation of the image data guided via the second light path to the eyepiece. By including the optical element that can be used to select one of the digital or optical view, or that can be used to overlay the digital image over the optical view, a hybrid viewfinder concept is provided that overcomes the drawbacks of previous systems.

For example, the optical element may be a moveable mirror configured to provide either the light guided via the first light path or the visual representation of the image data guided via the second light path to the eyepiece. Thus, the user is enabled to switch between a purely optical and a purely digital view.

Alternatively, the optical element may be a beam splitter configured to provide the visual representation of the image data guided via the second light path overlaid over the light guided via the first light path to the eyepiece. In this case, a digital overlay may be overlaid over the optical view.

In general, the microscope may comprise a beam-splitting optical element configured to split a portion of light guided on the first light path off towards the two image sensor assemblies. The two image sensor assemblies may be configured to generate the image data based on the portion of the light that is guided towards the two image sensor assemblies via the third light path. For example, the beam-splitting optical element may be arranged between the optical element and the objective of the microscope.

In some examples, the microscope comprises an optical zoom element. For example, the optical zoom element may be employed both by the optical view on the sample, and by the digital view that is generated via the two image sensor assemblies. The optical zoom element may be arranged between the beam-splitting optical element and the objective of the microscope in the first light path. For example, the optical zoom element may be a parfocal optical zoom element. In this case, the two image sensor assemblies might not require additional optical elements to obtain a view on a sample that is in focus. Alternatively, the optical zoom element may be an afocal optical zoom element.

In some examples, however, separate zoom elements may be used for the optical view and the digital view. In other words, the microscope may comprise a first and a second optical zoom element. The first optical zoom element may be arranged between the beam-splitting optical element and the eyepiece of the microscope in the first light path. The second optical zoom element may be arranged between the beam-splitting optical element and the two image sensor assemblies. In this case, the zoom of the optical view and of the digital view may be controlled separately.

For example, the first optical zoom element may be an afocal optical zoom element and the second optical zoom element may be a parfocal optical zoom element. The afocal optical zoom element may be easier to combine with the optics of the optical eyepiece, while the parfocal optical zoom element may be integrated such, that the two image sensor assemblies might not require additional optical elements to obtain a view on a sample that is in focus.

In some examples, the two image sensor assemblies may comprise a (single) sensor each. In some examples, however, a more complex setup may be used, with multiple image sensors per sensor assembly. For example, the two image sensor assemblies may each comprise a beam-splitter assembly and three image sensors. The beam-splitter assembly may be configured to guide light of a first spectral portion to the first image sensor, light of a second spectral portion to the second image sensor and light of a third spectral portion to the third image sensor. The three image sensors may be configured to generate the image data based on the spectral portions that are incident to the respective image sensors. With a three-sensor setup, and a separation of the light into the three spectral portions that is tuned to various emission wavelength bands of fluorophores, reflectance imaging of light in the visible light wavelength band and fluorescence imaging (with multiple fluorophores) can be performed at the same time, while retaining good image quality on the visible light image.

In various examples, the beam-splitting optical element is arranged between the optical element and the objective of the microscope in the first light path. In this configuration, the image provided by the display device might not be visible in the image recorded by the two image sensor assemblies.

In some examples, the optical path may be turned onto its side and folded into two halves, to reduce the amount of vertical space required within the microscope. For example, the microscope may comprise a first, a second and a third reflecting element. The first reflecting element may be arranged to guide the light on the first light path from a substantially vertical direction to a substantially horizontal direction. The second reflecting element may be arranged to guide the light on the light path from a substantially horizontal direction to a substantially vertical direction. The third reflecting element may be arranged to guide the light on the light path from a substantially vertical direction to a substantially horizontal direction. The first light path may comprise a first, second, third and fourth portion. The first portion may be located between the objective and the first reflecting element. The second portion may be located between the first and the second reflecting element. The third portion may be located between the second and the third reflecting element. The fourth portion may be located between the third reflecting element and the eyepiece. At least a sub-portion of the second portion and a sub-portion of the fourth portion may be arranged in a substantially anti-parallel manner. Such a setup may reduce a vertical space required for implementation.

For example, the beam-splitting optical element may be arranged in the second or third portion of the first light path. In this case, the two image sensor assemblies may be arranged at the sides of the first light path, further reducing a space required for implementing the optical components of the microscope.

In various examples, the display device is configured to provide a (digital) stereoscopic view on the image data via the eyepiece of the microscope. This may enable a fast switching between the optical and digital view without the user having to adjust to a different view on the sample.

In some examples, the microscope comprises a second display device configured to output a second visual representation of the image data. For example, the second visual representation may be provided via an auxiliary display or via a second eyepiece (e.g. for an assistant).

Various embodiments further provide a microscope system, such as a surgical microscope system, comprising the above-described microscope.

For example, various embodiments provide a microscope system comprising the microscope and a Light Emitting Diode (LED)-based illumination system. The LED-based illumination system may be configured to emit radiation power having at least one peak at a wavelength that is tuned to an excitation wavelength of at least one fluorescent material and/or to emit radiation power across a white light spectrum, with the light emitted across the white light spectrum being filtered such that light having a wavelength (spectrum) that coincides with at least one fluorescence emission wavelength (spectrum) of the at least one fluorescent material is attenuated or blocked. Similar to the three-sensor assembly introduced above, such an illumination system may be used to perform reflectance imaging of light in the visible light wavelength band and fluorescence imaging (with multiple fluorophores) at the same time, while retaining good image quality on the visible light image.

For example, each LED-based light source of the LED-based illumination system may be configured to emit radiation power towards a sample to be observed via the microscope. Each LED-based light source may be arranged adjacent to the objective of the microscope. This may alleviate the need for a light path to be used by the light generated by a remote light source.

Various embodiments further provide a method for imaging an object using a microscope. The method comprises guiding light from an objective of the microscope towards an eyepiece of the microscope using a first light path. The method comprises outputting a visual representation of image data captured by two image sensor assemblies of the microscope. The image data is based on a portion of the light that is guided via the first light path. The method comprises guiding the visual representation of the image data towards the eyepiece using a second light path. The method comprises providing the light guided via the first light path and/or the visual representation of the image data guided via the second light path to the eyepiece.

### Short description of the Figures

Some examples of apparatuses and/or methods will be described in the following by way of example only, and with reference to the accompanying figures, in which
- Fig. 1a: shows a schematic diagram of an example of a microscope;
- Fig. 1b: shows a schematic diagram of an example of a surgical microscope system comprising a microscope;
- Fig. 1c: shows a schematic diagram of a system for a microscope;
- Figs. 2: to 4 show schematic diagrams of further examples of microscopes;
- Fig. 5: shows a schematic diagram of an example of an illumination system for a microscope;
- Fig. 6: shows a flow chart of an example of a method for imaging an object using a microscope; and
- Fig. 7: shows a schematic diagram of an example of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

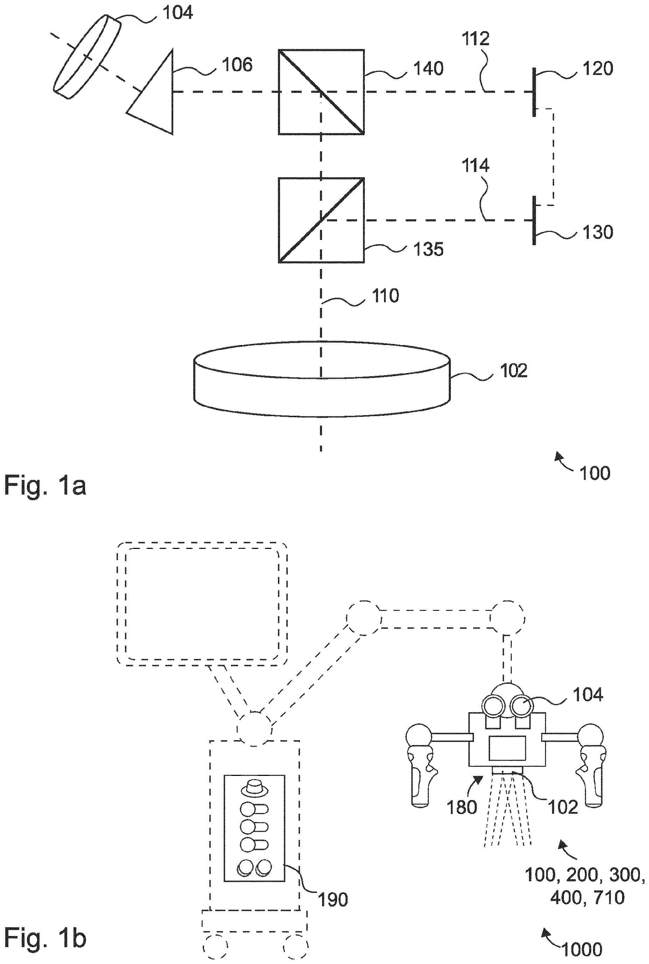

Fig. 1a shows a schematic diagram of an example of a microscope 100. The microscope comprises a first light path 110 configured to guide light from an objective 102 of the microscope towards an eyepiece 104 of the microscope. The microscope comprises a display device 120 configured to output a visual representation of image data captured by two image sensor assemblies 130 of the microscope. The image data is based on a portion of the light that is guided via the first light path. The microscope comprises a second light path 112 configured to guide the visual representation of the image data towards the eyepiece. The microscope comprises an optical element 140, configured to provide the light guided via the first light path and/or the visual representation of the image data guided via the second light path to the eyepiece.

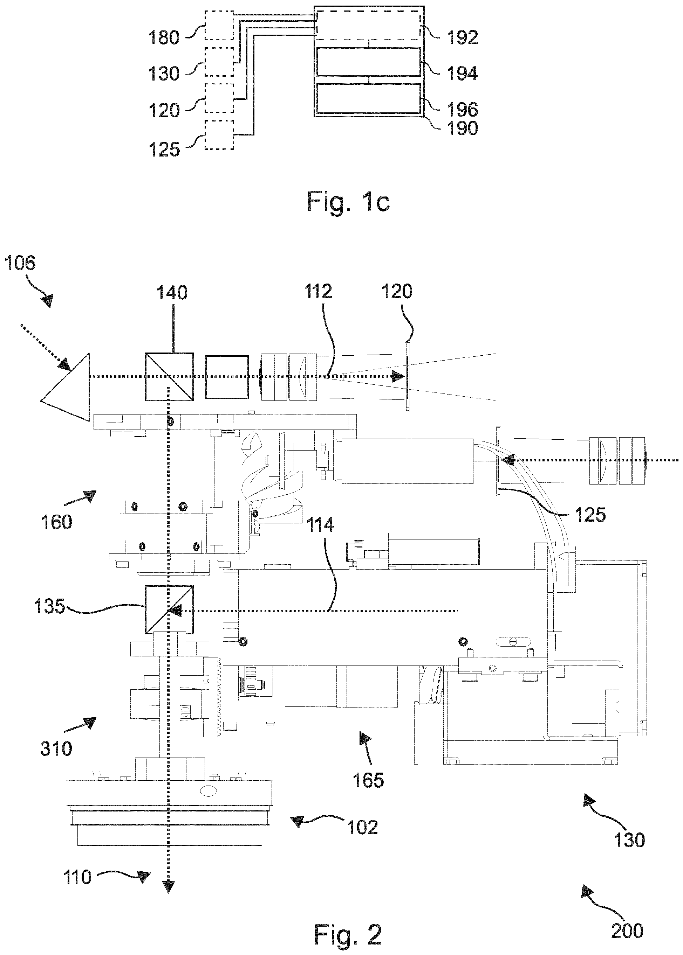

For example, the microscope may be part of a microscope system, such as the surgical microscope system 1000 shown in Fig. 1b. Fig. 1b shows a schematic diagram of an example of a surgical microscope system 1000 comprising a microscope, such as the microscope 100 shown in Fig. la, or one of the microscopes 200-400, 710 shown in connection with Figs. 2 to 4 and 7. In general, a distinction is made between the actual microscope, and the microscope system comprising the microscope, with the microscope system comprising the microscope and various components that are used in conjunction with the microscope, e.g. an illumination, an auxiliary display, an arm etc. In a microscope system, the actual microscope is often also referred to as the "optics carrier", as it comprises the optical components of the microscope system. In general, a microscope is an optical instrument that is suitable for examining objects that are too small to be examined by the human eye (alone). For example, a microscope may provide an optical magnification of an object. In modern microscopes, the optical magnification is often provided for a camera or an imaging sensor, such as the two image sensor assemblies 130. The microscope may further comprise one or more optical magnification components that are used to magnify a view on the sample.

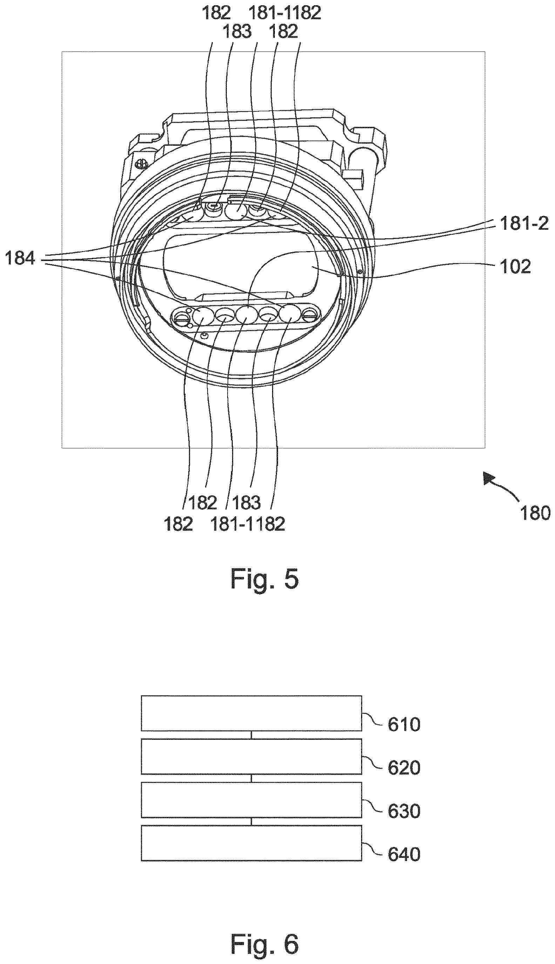

For example, the surgical microscope system 1000 shown in Fig. 1b further optionally comprises an illumination system, such as the Light Emitting Diode (LED)-based illumination system 180 shown in Fig. 1b. For example, the LED-based illumination system may be configured to emit radiation power having at least one peak at a wavelength that is tuned to an excitation wavelength of at least one fluorescent material and/or to emit radiation power across a white light spectrum. The light emitted across the white light spectrum may be filtered such that light having a wavelength spectrum that coincides with at least one fluorescence emission wavelength spectrum of the at least one fluorescent material is attenuated or blocked. For example, each LED-based light source of the LED-based illumination system may be configured to emit radiation power towards a sample to be observed via the microscope. Each LED-based light source may be arranged adjacent to the objective 102 of the microscope. More details of such an illumination system is introduced in connection with Fig. 5. In various examples, the term "emit radiation power is used for the actual light sources, as the light sources are configured to emit (electromagnetic) radiation within the spectrum that is defined as "light". In other words, the respective light sources may emit radiation power that manifests itself as light. Consequently, the light sources, and thus the LED-based illumination system, may be deemed to emit light in the various bands specified above and/or below.

Various examples of the microscope system may further comprise a system 190 for the microscope, i.e. a computer system for the microscope. Fig. 1c shows a schematic diagram of a system for a microscope. In general, the system for the microscope may be coupled with various components of the microscope system and/or of the microscope system, and may be configured to perform data and signal processing for the microscope or microscope system. For example, as shown in Fig. 1c, the system 190 may comprise one or more processors 194 and one or more storage devices 196. Optionally, the system 190 may further comprise an interface 192 for communicating with the other components of the microscope or microscope system. For example, as shown in Fig. 1c, the interface may be configured to communicate with the illumination system 180, with the two or more image sensor assemblies 130, with the display device 120, and/or with a second display device 125 (shown in Figs. 2 to 4). Optionally, the interface may also be used to communicate with other components of the microscope system or microscope, such as the arm, an auxiliary display, a touch-screen control display, handles, a foot pedal etc. In general, the functionality of the system 190 may be provided by the one or more processors, e.g. in conjunction with the interface 192 (for exchanging information or signals) and/or with the one or more storage devices (for storing information).

Embodiments of the present disclosure relate to a microscope, and to a microscope system comprising such a microscope (and one or more additional, optional components). There are a variety of different types of microscopes. If the microscope system is used in the medical or biological fields, the object being viewed through the microscope may be a sample of organic tissue, e.g. arranged within a petri dish or present in a part of a body of a patient. For example, the microscope system shown in Fig. 1b is a surgical microscope system, which is a microscope system for use during surgery of a patient. Accordingly, the microscope may be a microscope for use during surgery of a patient. However, the concept is also applicable to other samples, such as samples to be analyzed in material testing.

In the proposed microscope, a combination of various optical elements is provided that may provide, on the one hand, a compact implementation of the optics of a hybrid (surgical) microscope, and on the other hand, may overcome drawbacks of other surgical microscopes, such as the recording of a digital overlay by an image sensor of the microscope.

The microscope comprises a first light path 110 configured to guide light from an objective 102 of the microscope towards an eyepiece 104 of the microscope (via tube interface 106). In Figs. 2 to 4, only the tube interface 106 is shown, which acts as an interface to a tube lens of the eyepiece 104. In general, the first light path leads from the objective towards the eyepiece (but not necessarily entirely up to the eyepiece). For example, the first light path 110 may extend from the objective (at least) to the optical element 140. If the optical element is a moveable/tiltable mirror, the first light path may end at the moveable/tiltable mirror if the mirror is moved into the first light path, and to the eyepiece if the mirror is moved away from the first light path. If the optical element is a beam splitter, in some examples, the first light path may be deemed to end at the optical element 140, as the light path between the optical element and the eyepieces is shared by the visual representation emitted by the display device and the light traversing the first optical light path. In this case, the optical path between the optical element and the eyepiece may be deemed a shared light path. Alternatively, the first light path may be deemed to traverse the optical element 140 and extend to the eyepiece 102. In general, the first light path may be configured to provide a (purely) optical view on a sample being viewed through the microscope.

In various examples, the microscope is a stereoscopic microscope, providing a stereoscopic view on a sample. Consequently, two parallel beams of light may be guided via the first light path (and also the other light paths), on two parallel light paths of the first light path. Consequently, the first light-path, and similarly the second light-path and/or the third light-path, may encompass two (separate) light paths for the two oculars of the eyepiece.

The display device 120, on the other hand, may be used to provide a purely digital view on the sample being viewed through the microscope, or to provide an overlay to be overlaid over the optical view on the sample provided via the first light path. Additionally or alternatively, the display device 120 may be configured to provide external information, such as information provided by an external tool or sensor, or a user interface of the microscope system. For example, the display device may be one of a Liquid Crystal Display (LCD)-based display device, an Organic Light-Emitting Diode (OLED)-based display device and a projection-based display device. The display device 120 is configured to output the visual representation of the image data captured by the two image sensor assemblies 130 of the microscope. For example, the display device 120 may be configured to output the image data captured by the two image sensor assemblies 130 of the microscope. In this case, no further image processing (e.g. by the system 190) may be necessary. In some examples, however, the system 190 may be used to process the image data provided by the two image sensor assemblies. In other words, the system 190 may be configured to process the image data provided by the two image sensor assemblies, and to provide a display signal to the display device. The display device may be configured to provide the visual representation based on the display signal. For example, the system 190 may be configured to highlight one or more portions of the image data within the display signal, e.g. to add an overlay representing fluorescence emissions on top of a white light-image. For example, the system 190 may be configured to apply sharpening and/or denoising on the image data.

In general, the microscope may be configured to provide a stereoscopic view on the sample being viewed through the microscope - on the one hand, the optical view on the sample may be a stereoscopic view, on the other hand, a digital stereoscopic view may be provided by the display device. In other words, the display device may be configured to provide a stereoscopic view on the image data via the eyepiece of the microscope. For example, the display device may comprise two displays, with each display being configured to provide one side of the stereoscopic view. Alternatively, the display device may comprise a single display, with a first portion of the display being configured to provide one side of the stereoscopic view, and with another portion of the display being configured to provide the other side of the stereoscopic view. The two sides of the stereoscopic view may be guided towards the eyepiece via the second light path. For example, the second light path may extend between the display device and the optical element. Alternatively, if the optical element is a tiltable/moveable mirror, the second light path may extend between the display device and the eyepiece, via the optical element, if the mirror is placed into a position that guides the visual representation towards the eyepiece.

The image data is generated by the two image sensor assemblies, based on a portion of the light that is guided via the first light path. Accordingly, that portion of the light guided via the first light path may be branched off (split off) from the first light path. The microscope may comprise, as further shown in Fig. la, a beam-splitting optical element 135 (e.g. a beam-splitter) configured to split a portion of light guided on the first light path off towards the two image sensor assemblies (e.g. via a third light path 114). The two image sensor assemblies, on the other hand, may be configured to generate the image data based on the portion of the light that is guided towards the two image sensor assemblies via the third light path. For example, the two image sensor assemblies may be configured to provide the image data to the display device 120, or to the system 190.

In various examples, the portion of the light guided via the first light path may be split off from the light path before the light reaches the optical element, i.e. between the objective and the optical element. In other words, the beam-splitting optical element may be arranged between the optical element and the objective of the microscope in the first light path. For example, as illustrated in more detail in connection with Figs. 2, 3 and 4, the beam-splitting optical element may be arranged between an optical zoom element 150; 160 of the microscope and the objective, or between the optical zoom element 150; 160 of the microscope and the optical element 140.

In some microscopes, multiple eyepieces may be supported, e.g. a main eyepiece for the main surgeon, and an auxiliary eyepiece for an assistant. In the microscope shown in the present disclosure, the auxiliary eyepiece may be a (purely) digital eyepiece, e.g. without an optical path between the digital eyepiece and the sample. Alternatively or additionally, the microscope may comprise an outward facing display. For example, the digital eyepiece, and the outward-facing display, may be implemented by a second display device. For example, as shown in Figs. 2 - 4, the microscope may comprise a second display device 125 configured to output a second visual representation of the image data. For example, the second visual representation of the image data may contain the same images as the first visual representation. Alternatively, the first and second visual representation may differ regarding the images shown. For example, the first and second visual representation may differ regarding the information overlay being shown.

The microscope comprises the optical element 140, which is configured to provide the light guided via the first light path and/or the visual representation of the image data guided via the second light path to the eyepiece. As has been pointed out before, the optical element may be a moveable mirror configured to provide either the light guided via the first light path or the visual representation of the image data guided via the second light path to the eyepiece. The moveable mirror may be moveable between a first position and a second position, the first position allowing the light guided via the first light path to reach the eyepiece without intersecting the optical element, and the second position allowing the visual representation provided by the display device to reach the eyepiece via the optical element. For example, in the second position, the light guided via the first light path may be blocked or deflected by the optical element. Alternatively, the optical element 140 may be a moveable beam splitter, and the light guided via the first light path may traverse the optical element when the optical element is in the second position. For example, the position of the optical element may be controlled by the user. For example, the system may be configured to control the position of the optical element, based on an input of a user of the microscope.

In some examples, the optical element may be a (static) beam splitter configured to provide the visual representation of the image data guided via the second light path overlaid over the light guided via the first light path to the eyepiece. In other words, in this case, the light guided via the first optical may (always) traverse the optical element, and the visual representation may be reflected towards the eyepiece by the optical element, thus overlaying the visual representation over the light guided via the first light path.

In various examples, the eyepiece may further comprise one or more additional optical element, for adjusting the focus on the optical (and digital) view on the sample.

In general, the microscope may comprise one or more additional optical elements. For example, one major functionality of a microscope is the provision of an enlarged view on the sample. In general, the enlarged view on the sample may be adjusted, by adjusting the factor by which the view is enlarged. In laboratory microscopes, this may be done by changing the objective being used. In surgical microscopes, the microscope may comprise an optical zoom element for continuously adjusting the zoom provided by the microscope.

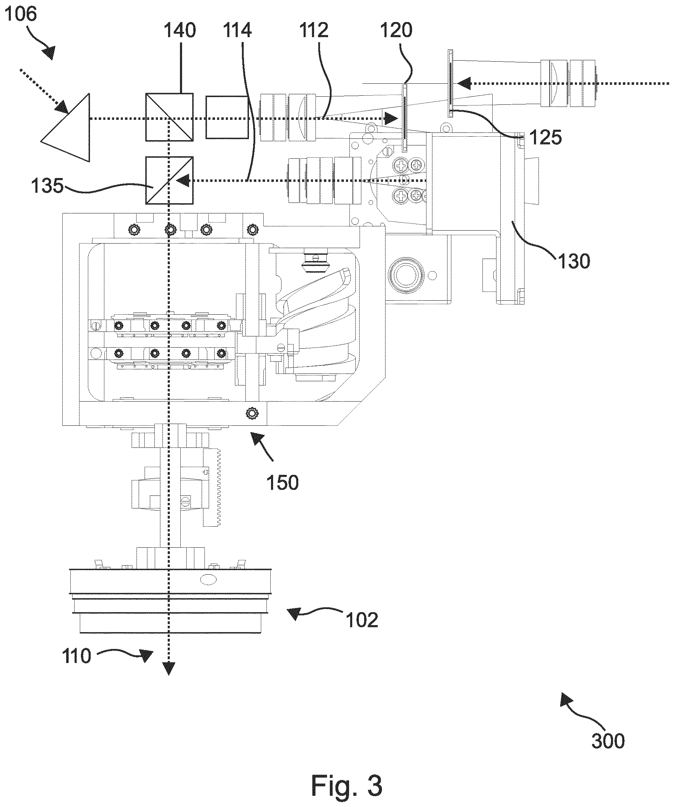

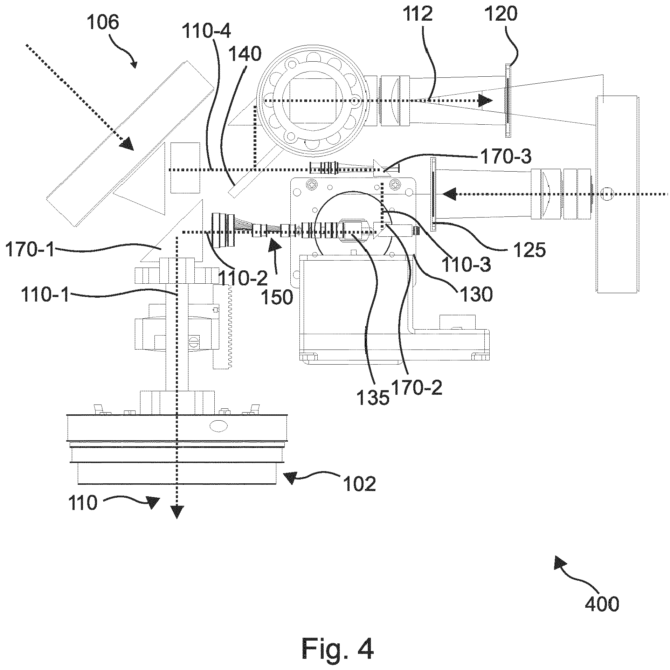

In other words, the microscope may comprise an optical zoom element 150 (as shown in Figs. 3 and 4). For example, the optical zoom element may comprise one or more optical components and a mechanical apparatus, the mechanical apparatus being configured to adjust a positioning of the one or more optical components relative to each other and relative to the objective.

In general, there are two positions that the optical zoom element can be placed at - between the objective and the beam-splitting optical element, so both the optical view and the digital view use the same zoom element, or two optical zoom elements that are placed between the beam-splitting optical element and the optical element, and between the beam-splitting optical element and the two image sensor assembles. For example, in a microscope with a single optical zoom element, optical zoom element may be arranged between the beam-splitting optical element and the objective of the microscope in the first light path.

There are various types of optical zoom elements that can be employed in the microscope. For example, the optical zoom element may be a parfocal optical zoom element. In contrast to an afocal zoom element, a parfocal zoom element may enable to magnify a view on a sample while keeping the focus of the view. As the view remains in focus, e.g. manual refocusing might be not necessary after zooming. Hence, a parfocal zoom element may provide an optical zoom which enables generating sharp images with different magnifications. For example, the parfocal zoom element may be used to project a real image (i.e. an image that is in focus) onto the surfaces of the image sensors of the two image sensor assemblies. After the beam-splitting optical element, the light may be projected into infinity, to be re-focused using the optical elements of the eyepiece. Alternatively, the optical zoom element may be an afocal optical zoom element. In this case, one or more additional optical elements, which might not be necessary in case a parfocal zoom is used, may be placed within the third light path.

In the example shown in Fig. 4, a parfocal zoom system 150 is used as optical zoom element 150. In other words, the microscope may comprise an optical zoom element 150 (which is arranged in a second portion of the first light path, between a first reflecting element 170-1 and the beam-splitting optical element 135), and which may be a parfocal zoom system.

In general, the parfocal zoom system may be used to project an image that is in focus (i.e. a "real image" onto the respective image sensors of the two image sensor assemblies, via the beam-splitting optical element. In other words, the beam-splitting optical element may be configured to split the light being guided on the first light path into a first portion and a second portion. The parfocal zoom system may be configured to generate a real image on a surface of (an image sensor of) the at least one sensor assembly via the beam-splitting optical element. Accordingly, the real image may be based on the first portion.

As shown in Fig. 4, the microscope may further comprise an optical system configured to receive the second beam portion and guide the second beam portion along the first light path. For example, the optical system may comprise the second and third reflecting elements. Additionally, the optical system may comprise a lens configured to project an intermediate image in the second beam portion to infinity. Furthermore, the optical system may comprise a tube lens configured to focus the second beam portion to a further intermediate image, and an ocular to view the further intermediate image. For example, the eyepiece 104 may comprise the ocular.

Alternatively, as has been mentioned above, separate optical zoom elements may be used. For example, as shown in Fig. 2, the microscope may comprise a first 160 and a second 165 optical zoom element. The first optical zoom element may be arranged between the beam-splitting optical element and the eyepiece of the microscope in the first light path. The second optical zoom element may be arranged between the beam-splitting optical element and the two image sensor assemblies (in the third light path). Again, both optical zoom elements may be afocal or parfocal zoom elements. In an advantageous implementation, the first optical zoom element may be an afocal optical zoom element (as the focus of the optical view is controlled via the eyepiece) and the second optical zoom element may be a parfocal optical zoom element (so the real image can be directly projected onto the surfaces of the image sensors).

For example, the two image sensor assemblies may each comprise one or more (e.g. one or three) image sensors. In a simple implementation, each of the two image sensor assemblies may comprise a single image sensor. Alternatively, each of the two image sensor assemblies may comprise multiple, e.g. three, image sensors. In both cases, the image sensor(s) may comprise or be an APS (Active Pixel Sensor) - or a CCD (Charge-Coupled-Device)-based imaging sensor. For example, in APS-based image sensors, light is recorded at each pixel using a photodetector and an active amplifier of the pixel. APS-based image sensors are often based on CMOS (Complementary Metal-Oxide-Semiconductor) or S-CMOS (Scientific CMOS) technology. In CCD-based image sensors, incoming photons are converted into electron charges at a semiconductor-oxide interface, which are subsequently moved between capacitive bins in the image sensor by a control circuitry of the image sensor to perform the imaging. The image data may be obtained by receiving the image data from the image sensor (e.g. via the interface 192), by reading the image data out from a memory of the image sensor (e.g. via the interface 192), or by reading the image data from a storage device 196 of the system 190, e.g. after the image data has been written to the storage device 196 by the image sensor or by another system or processor.

In some examples, the two image sensor assemblies may employ a complex setup, in which different spectral portions of the light provided via the third light path are guided to different image sensors of the respective image sensor assemblies. For example, the two image sensor assemblies may each comprise a beam-splitter assembly and three image sensors. The beam-splitter assembly may be configured to guide light of a first spectral portion (of the overall spectrum) to the first image sensor, light of a second spectral portion to the second image sensor and light of a third spectral portion to the third image sensor. For example, the three image sensors may be configured to generate the image data based on the spectral portions that are incident to the respective image sensors. For example, the system may be configured to process the image data that is based on the spectral portions incident to the respective image sensors, and to generate the display signal based by generating a white light image (visible light image) with optical overlays representing fluorescence emissions by one or more fluorophores. For example, the microscope may be configured to perform reflectance imaging and fluorescence imaging. For example, fluorescence emission of different fluorophores may be guided towards different image sensors of the image sensor assemblies. To generate a display signal that represents a white light image and a fluorescence imaging overlay, the system may use the image data of one of the image sensors (that covers the spectrum used by the respective fluorescence emissions) to generate the fluorescence imaging overlay, and the image data of the remaining image sensors to generate the white light image. If two fluorophores are used, the system may use the image data of a first image sensor (that covers the spectrum used by the fluorescence emissions of a first fluorophore) to generate a first fluorescence imaging overlay, the image data of a second image sensor (that covers the spectrum used by the fluorescence emissions of a second fluorophore) to generate a second fluorescence imaging overlay, and the image data of the remaining image sensor to generate the white light image. The white light image and the fluorescence imaging overlay(s) may be combined and used to generate the display signal.

In various examples of the present disclosure, at least a part of the first light path is turned to the side, to decrease the vertical height of the microscope that is required due to the arrangement of the optical components of the microscope. As shown in Figs.4, the microscope may comprise a first 170-1, a second 170-2 and a third 170-3 reflecting element, which are placed in the first light path, and which may guide the light along the first light path. For example, the reflecting elements may be implemented using mirrors. For example, the reflecting elements may be arranged at a 45-degree angle to the light that is guided on the first light path. Consequently, the reflecting elements may be configured to change a direction of a light by approximately 90 degrees (e.g. between 70 degrees and 110 degrees), e.g. from a substantially horizontal direction to a substantially vertical direction, and vice versa. In this context, a horizontal direction is defined perpendicular to a direction of the force of gravity, and a vertical direction is defined in parallel to the force of gravity. The substantially horizontal direction may correspond to the horizontal direction, and the substantially vertical direction may correspond to the vertical direction. However, the substantially horizontal direction may deviate by up to ±10 degrees (or up to ±20 degrees) from the horizontal direction, and the substantially vertical direction may deviate by up to ±10 degrees (or up to ±20 degrees) from the vertical direction. Similarly, a vertical height may be defined in parallel to the force of gravity, and a lateral length/extent may be defined perpendicular to the force of gravity.

The first reflecting element may be arranged to guide the light on the first light path (coming from the objective) from a substantially vertical direction to a substantially horizontal direction. In other words, light (e.g. a reflection of light at a sample, or fluorescence emissions emitted by a fluorophore included in the sample) may enter the microscope at the objective, traverse the first light path in a substantially vertical direction (in the first portion of the first light path) until it intersects with the first reflecting element, and then is deflected by the first reflecting element and changes direction to the substantially horizontal direction (in the second portion of the first light path), as shown in Figs. 1a, 1b, 2b and 3. In other words, the first reflecting element may turn the light path on its side.

The second reflecting element may be arranged to guide the light on the light path from a substantially horizontal direction to a substantially vertical direction. In other words, the light deflected by the first reflecting element (and thus turned into the substantially horizontal direction) may be guided (in the second portion of the first light path) to intersect with the second reflecting element, which may turn the light into the substantially vertical direction again (as shown in Fig. 4).

The third reflecting element may be arranged to guide the light on the light path from the substantially vertical direction (in the third portion of the light path) to a substantially horizontal direction (back towards the eyepiece). In other words, as shown in Fig. 4, the light may be guided away from a direct geometric axis between the objective and the eyepiece by the first reflecting element, and turned around and back towards the eyepiece by the second and third reflecting elements.

Consequently, the first light path is logically divided by the reflecting elements. The first light path may comprise a first 110-1, the second 110-2, the third 110-3 and the fourth 110-4 portion (or section), as divided by the reflecting elements. For example, the first portion may be located between the objective and the first reflecting element (or extend from the objective to the first reflecting element). The second portion may be located between the first and the second reflecting element (or extend from the first reflecting element to the second reflecting element). The third portion may be located between the second and the third reflecting element (or extend from the second reflecting element to the third reflecting element). The fourth portion may be located between the third reflecting element and the eyepiece (or extend from the third reflecting element to the optical element 140, or to the eyepiece 104.

As shown in Fig. 4, at least a sub-portion of the second portion and a sub-portion of the fourth portion may be arranged in a (substantially) anti-parallel manner. For example, an optical axis of the second portion may run (substantially) in parallel to an optical axis of the fourth portion. In other words, at least a sub-portion of the second portion and a sub-portion of the fourth portion may be arranged (horizontally) substantially parallel to each other (i.e. vertically above each other, with the (sub-portions) being arranged substantially in parallel on their respective lateral/horizontal planes), with the direction of light being in opposite directions. In other words, the light may be guided in a first substantially horizontal direction on the second portion of the first light path, and in a second substantially horizontal direction on the fourth portion of the first light path, with the first and second substantially horizontal directions being opposite to each other. In this context, "substantially in parallel" or "substantially in an anti-parallel manner" indicates, that the geometric axes of the respective portions of the light path deviate by at most ±10 degrees (or at most ±20 degrees) from each other, and that the respective sub-portions are arranged vertically on top of each other.

In general, the second and fourth portions may be used to implement optical components without increasing the vertical height of the microscope. Accordingly, the second and fourth portions may be larger than the third portion. For example, a (maximal) lateral extent of the second portion and/or the fourth portion of the first light path may be at least 20% larger (or at least 50% larger, or at least 75% larger, or at least 100% larger) than a maximal vertical height of the third portion of the first light path.

Accordingly, various optical elements may be included in the second, third or fourth portion of the first light path. For example, the beam-splitting optical element may be arranged in the second, third or fourth portion of the first light path. For example, in Fig. 43, the beam-splitting optical element 135 is arranged in the second portion 110-2 of the first light path.

The interface 192 may correspond to one or more inputs and/or outputs for receiving and/or transmitting information, which may be in digital (bit) values according to a specified code, within a module, between modules or between modules of different entities. For example, the interface 192 may comprise interface circuitry configured to receive and/or transmit information. In embodiments the one or more processors 194 may be implemented using one or more processing units, one or more processing devices, any means for processing, such as a processor, a computer or a programmable hardware component being operable with accordingly adapted software. In other words, the described function of the one or more processors 194 may as well be implemented in software, which is then executed on one or more programmable hardware components. Such hardware components may comprise a general-purpose processor, a Digital Signal Processor (DSP), a micro-controller, etc. In at least some embodiments, the one or more storage devices 196 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the microscope and of the microscope system are mentioned in connection with the proposed concept or one or more examples described above or below (e.g. Fig. 2 to 7). The microscope and the microscope system may comprise one or more additional optional features corresponding to one or more aspects of the proposed concept or one or more examples described above or below.

In the following, different implementations of the microscope shown in Figs. 1a to 1c are shown. Figs. 2 to 4 show schematic diagrams of further examples of microscopes. Fig. 2 shows a schematic diagram of an example of a microscope 200. For example, the microscope 200 may be implemented similar to the microscope introduced in connection with Figs. 1a to 1c. The microscope comprises a first light path 110 configured to guide light from an objective 102 of the microscope towards an eyepiece of the microscope (via a tube lens interface 106). The microscope comprises a display device 120 configured to output a visual representation of image data captured by two image sensor assemblies 130 of the microscope. The image data is based on a portion of the light that is guided via the first light path. The microscope comprises a second light path 112 configured to guide the visual representation of the image data towards the eyepiece. The microscope comprises an optical element 140, configured to provide the light guided via the first light path and/or the visual representation of the image data guided via the second light path to the eyepiece.

In Fig. 2, an approach is chosen with two separate optical zoom elements 160, 165, which are arranged in the first and in the third optical light path. In other words, the microscope 200 comprises a first 160 and a second 165 optical zoom element. The first optical zoom element is arranged between a beam-splitting optical element 135 (which is configured to split a portion of light guided on the first light path off towards the two image sensor assemblies, and arranged between the optical element and the objective of the microscope in the first light path) and the eyepiece of the microscope in the first light path, and the second optical zoom element is arranged between the beam-splitting optical element and the two image sensor assemblies. In Fig. 2, the first optical zoom element is an afocal optical zoom element and wherein the second optical zoom element is a parfocal optical zoom element.

In the microscope 200, the light is split after a multi-focal optical zoom element 210, and guided towards the first 160 and second 165 optical zoom elements. In other words, in addition to the first and second optical zoom elements, the microscope may comprise a third (multifocal) optical zoom element. The zoom system used in the microscope 200 provides an independent visible light and infrared corrected parfocal zoom. The microscope may provide an afocal visible light corrected zoom for the main surgeon (via the eyepiece 104). The back assistant may be provided with a pure stereoscopic digital view (via a second display device 125 configured to output a second visual representation of the image data). A switchable mirror may implement the optical element 140, and may be used for the eyepiece of the main surgeon. For example, an LED-based illumination system (as shown in Fig. 5) may be used for critical illumination with separate excitation and fluorescence excitation illumination. The side assistant may be provided with a shared display of the view of the main surgeon or with an independent display. In such an implementation, the independent zoom may allow for new features. Additionally, this implementation is relatively small in height. Also, a large exit pupil in tube in low magnification may be enabled. However, due to the separate zoom elements, the cost of this implementation may be increased. Furthermore, a control of the zoom may be more challenging.

More details and aspects of the microscope are mentioned in connection with the proposed concept or one or more examples described above or below (e.g. Fig. 1a to 1c, 3 to 7). The microscope may comprise one or more additional optional features corresponding to one or more aspects of the proposed concept or one or more examples described above or below.

Fig. 3 shows a schematic diagram of an example of a microscope 300. For example, the microscope 300 may be implemented similar to the microscope introduced in connection with Figs. 1a to 1c. The microscope comprises a first light path 110 configured to guide light from an objective 102 of the microscope towards an eyepiece of the microscope (via a tube lens interface 106). The microscope comprises a display device 120 configured to output a visual representation of image data captured by two image sensor assemblies 130 of the microscope. The image data is based on a portion of the light that is guided via the first light path. The microscope comprises a second light path 112 configured to guide the visual representation of the image data towards the eyepiece. The microscope comprises an optical element 140, configured to provide the light guided via the first light path and/or the visual representation of the image data guided via the second light path to the eyepiece.

In contrast to the microscope of Fig. 2, the microscope 300 of Fig. 3 uses the same optical zoom element for the optical view and the digital view. In other words, the microscope comprises an optical zoom element 150, which is arranged between the beam-splitting optical element and the objective of the microscope in the first light path. Accordingly, the light is split after the zoom is performed. In Fig. 3, the optical zoom element 150 is an afocal optical zoom element. For example, the optical zoom element may provide a visible light and infrared light corrected afocal zoom. The beam-splitting optical element 135 is thus arranged between the optical zoom element and the optical element, and thus also between the optical element and the objective, and configured to split a portion of light guided on the first light path off towards the two image sensor assemblies.

In Fig. 3, the back assistant is provided with a pure stereoscopic digital view (via a second display device 125 configured to output a second visual representation of the image data). A switchable mirror may implement the optical element 140, and may be used for the eyepiece of the main surgeon. For example, an LED-based illumination system (as shown in Fig. 5) may be used for critical illumination with separate excitation and fluorescence excitation illumination. The side assistant may be provided with a shared display of the view of the main surgeon or with an independent display.

This approach may lower the cost of implementation, and may generate fewer technical risks. On the other hand, such an implementation may lead to a large vertical height of the microscope.

More details and aspects of the microscope are mentioned in connection with the proposed concept or one or more examples described above or below (e.g. Fig. 1a to 2, 4 to 7). The microscope may comprise one or more additional optional features corresponding to one or more aspects of the proposed concept or one or more examples described above or below. Fig. 4 shows a schematic diagram of an example of a microscope 400. For example, the microscope 400 may be implemented similar to the microscope introduced in connection with Figs. 1a to 1c. The microscope comprises a first light path 110 configured to guide light from an objective 102 of the microscope towards an eyepiece of the microscope (via a tube lens interface 106). The microscope comprises a display device 120 configured to output a visual representation of image data captured by two image sensor assemblies 130 of the microscope. The image data is based on a portion of the light that is guided via the first light path. The microscope comprises a second light path 112 configured to guide the visual representation of the image data towards the eyepiece. The microscope comprises an optical element 140, configured to provide the light guided via the first light path and/or the visual representation of the image data guided via the second light path to the eyepiece.

In contrast to the microscope of Fig. 2, the microscope 400 of Fig. 4 uses the same optical zoom element for the optical view and the digital view. In other words, the microscope comprises an optical zoom element 150, which is arranged between the beam-splitting optical element and the objective of the microscope in the first light path. Accordingly, the light is split after the zoom is performed. In the case of the microscope of Fig. 4, the optical zoom element 150 is a parfocal optical zoom element. For example, the optical zoom element may provide a visible light and infrared light corrected parfocal zoom. The tube lens (of the eyepiece) might only correct for visible light. The beam-splitting optical element 135 is thus arranged between the optical zoom element and the optical element, and thus also between the optical element and the objective, and configured to split a portion of light guided on the first light path off towards the two image sensor assemblies.

In Fig. 4, the back assistant is provided with a pure stereoscopic digital view (via a second display device 125 configured to output a second visual representation of the image data). A switchable mirror may implement the optical element 140, and may be used for the eyepiece of the main surgeon. For example, an LED-based illumination system (as shown in Fig. 5) may be used for critical illumination with separate excitation and fluorescence excitation illumination. The side assistant may be provided with a shared display of the view of the main surgeon or with an independent display.

The microscope of Fig. 4 provides a compact implementation, by leading the first light path in a meandering manner through the microscope. To achieve this, the microscope comprises a first 170-1, a second 170-2 and a third 170-3 reflecting element, with the first reflecting element being arranged to guide the light on the first light path from a substantially vertical direction to a substantially horizontal direction, the second reflecting element being arranged to guide the light on the light path from a substantially horizontal direction to a substantially vertical direction, and the third reflecting element being arranged to guide the light on the light path from a substantially vertical direction to a substantially horizontal direction. Thus, the first light path is separated by the reflecting elements into different portions. Consequently, the first light path comprises a first 110-1, second 110-2, third 110-3 and fourth 110-4 portion. The first portion is located between the objective and the first reflecting element, the second portion is located between the first and the second reflecting element, the third portion is located between the second and the third reflecting element and the fourth portion is located between the third reflecting element and the eyepiece. At least a sub-portion of the second portion and a sub-portion of the fourth portion are arranged in a (substantially) anti-parallel manner. As can be seen in Fig. 4, a portion of the second 110-2 and fourth 110-4 are arranged (horizontally) in an anti-parallel manner, i.e. both extending horizontally, above each other, with the light being directed in opposite horizontal (lateral) directions. In Fig. 4, the beam-splitting optical element is arranged in the second portion of the first light path.

Through this meandering structure, a small implementation of the microscope is achieved. However, the zoom design may be adjusted for this approach.

More details and aspects of the microscope are mentioned in connection with the proposed concept or one or more examples described above or below (e.g. Fig. 1a to 3, 5 to 7). The microscope may comprise one or more additional optional features corresponding to one or more aspects of the proposed concept or one or more examples described above or below.

Fig. 5 shows a schematic diagram of an example of an illumination system 180 for a microscope. The illumination system 180 is an LED-based illumination system 180 that is suitable for a microscope. For example, the illumination system 180 shown in Fig. 5 may be integrated within the microscopes and/or microscope systems shown in connection with Figs. 1a to 4. Particularly, the illumination system 180 shown in Fig. 5 may be located at the objective 102 of the microscopes shown in connection with Figs. 1a to 4.

The illumination system 180 of Fig. 5 is an LED-based illumination system being configured to emit radiation power having at least one peak at a wavelength that is tuned to an excitation wavelength of at least one fluorescent material and/or to emit radiation power across a white light spectrum. For example, the illumination system shown in Fig. 5 comprises one or more first LED-based light sources 181-1. The one or more first LED-based light sources are configured to emit radiation power across a white light color spectrum. The illumination system comprises at least one optical filter 181-2. The at least one optical filter is arranged to filter the light emitted by the one or more first LED-based light sources. For example, the light emitted across the white light spectrum may be filtered such that light having a wavelength spectrum that coincides with at least one fluorescence emission wavelength spectrum of the at least one fluorescent material is attenuated or blocked. The illumination system comprises one or more second LED-based light sources 182. The one or more second LED-based light sources are configured to provide light having at least one peak at a wavelength that is tuned to an excitation wavelength of at least one fluorescent material. Each LED-based light source 181-1; 182 (and optionally 183) may be configured to emit radiation power towards a sample to be observed via the microscope.

In microscope systems, illumination systems are generally used to illuminate the sample, e.g. a sample on a sample stage (in case of a laboratory microscope), or a patient on an operating table. Consequently, the light sources 181-1 and 182 (and, as introduced below, 183) may be configured to emit radiation power towards the sample to be observed via the microscope. In other words, the light emitted by the light sources may be directed at the sample, e.g. at the sample stage, or towards the patient. To avoid an overly wide beam angle of the light source, optical concentration elements may be used to direct the light towards the sample. In other words, each LED-based light source may be configured to emit the light towards the sample through an optical concentration element. In general, different kinds of optical concentration elements may be used, such as lenses, light guides, or parabolic concentrators. For example, compound parabolic concentrators may be used. In other words, the optical concentration element may be a compound parabolic concentrator (CPC), e.g. Total Internal Reflection (TIR)-based CPC. Compound parabolic concentrators are optical elements, having a hollow and parabolic shape, that are suitable for collecting and concentrating light from light sources, and that yield a pre-defined maximal angle at which the light is emitted from the compound parabolic concentrator. For example, each light source may be coupled with a compound parabolic concentrator, and the light of the light sources may be concentrated by the compound parabolic concentrator coupled with the light sources.

In general, the light sources being used in embodiments of the present disclosure are LED-based light sources. In general, an LED-based light source may comprise an LED, e.g. a surface mounted LED (i.e. a SMD LED), and a connection structure for electrically connecting the LED to an energy source. LEDs are usually connected to a driver circuit (usually an integrated circuit) that is configured to supply the LED with energy, i.e. with an electric current. In some embodiments, each light source may comprise a corresponding driver circuit. Alternatively, a common driver circuit may be used to supply (all of) the LEDs with energy. In any case, the driver circuit may be used to drive the LEDs at full intensity. Alternatively or additionally, the driver may be capable of driving the LEDs with less than full intensity, which is denoted "dimming". In general, in illumination systems for microscopes, different levels of light intensity may be desired, so the light sources may be dimmable, i.e. a driver circuit of the light sources may be capable of driving the LEDs with less than full intensity, e.g. in response to a control signal from a control device. Various approaches may be used for the dimming, such as electric current-based dimming, or pulse-width modulation-based dimming. For example, the system 190, e.g. one or more processors 194 of the system 190, shown in Fig. 1c, may be configured to control the light sources. As individual light sources are being used, the light sources may be controlled independently from each other (if each light source has their own driver circuit), or at least in groups (e.g. if the first and second light sources have different driver circuits, or are independently controllable via a single driver circuit). Accordingly, the one or more processors 194 (or, more generally, the system 190) may be configured to control the one or more first and the one or more second LED-based light sources independent from each other.

The illumination system comprises different groups (or sets) of light sources. For example, the illumination system comprises a first group or set of light sources comprising the one or more first LED-based light sources 181-1, and a second group or set of light sources comprising the one or more second LED-based light sources 182. In some embodiments, as also shown in Fig. 5, the illumination system may even comprise a third group or set of light sources comprising one or more third LED-based light sources 183.

In general, the light sources (or groups/sets) of light sources may be distinguished by the light spectra they emit, or by the light spectra they emit after being filtered by one of the filters. For example, the one or more first LED-based light sources are configured to emit radiation power across the white light color spectrum. In other words, the one or more first LED-based light sources may be configured to emit radiation power at a continuous wavelength band that continually spans at least 90% of the wavelength band between 380 nm and 740 nm. The one or more first LED-based light sources may be broad-band light sources emitting light in a continuous wavelength band spanning at least a 300 nm range. In more generic terms, the one or more first LED-based light sources may be denoted "white light" LEDs, i.e. LEDs that emit radiation power that is perceived as being "white light" due to the inclusion of a wide wavelength band.

The one or more second LED-based light sources are different - they emit radiation power having at least one peak at a wavelength that is tuned to an excitation wavelength of at least one fluorescent material. Accordingly, the one or more second LED-based light sources may be denoted "fluorescence excitation light sources". In other words, the one or more second LED-based light sources may be narrow-band light sources (i.e. they emit at one or multiple wavelength bands each spanning less than a 100 nm wavelength range). This may be achieved using different approaches. For example, the light sources may be light sources that only emit radiation power in a narrow band, without using a filter. In other words, at least a subset of the one or more second LED-based light sources may be configured to provide light having at least one peak at a wavelength that is tuned to an excitation wavelength of the at least one fluorescent material without using a filter to limit the emitted light to the at least one peak. In other words, at least a subset of the one or more second LED-based light sources may comprise LEDs that are configured to emit radiation power in a narrow band (i.e. less than a 100 nm wavelength range, or less than a 50 nm wavelength range). Alternatively or additionally, filters may be used with a subset of the one or more second LED-based light sources. In other words, as further shown in Fig. 5, the illumination system (e.g. at least a subset of the one or more second LED-based light sources) may comprise a second optical filter 184 (e.g. at least one second optical filter 184), arranged to filter the light emitted by at least a subset of the one or more second LED-based light sources. For example, the second filter may be configured to limit the light emitted by at least a subset of the one or more second LED-based light sources to the at least one peak at a wavelength that is tuned to an excitation wavelength of the at least one fluorescent material. In some embodiments, the two approaches may be combined - for a subset of the fluorescent materials, a light source without a filter may be used (as a sufficiently narrow-band light source is available), for another subset of the fluorescent materials, a filter may be used to (further) limit the emitted wavelengths. For example, In the context of this application, the term "light having at least one peak at a wavelength that is tuned to an excitation wavelength of at least one fluorescent material" may be understood as the light having its highest intensity at a wavelength or wavelength band that intersects with an excitation wavelength or wavelength band of at least one fluorescent material, with light at other wavelengths being emitted at an intensity that is at most 80% (or at most 50%, at most 20%, at most 10%) of the highest intensity.

In general, the light emitted by the one or more second LED-based light sources is tuned to the excitation wavelength/wavelengths of at least one fluorescent material. Fluorescent materials are often used in microscopy to highlight a portion of a tissue or a blood vessel that has been previously marked using a fluorescent material. For example, a fluorescent dye, such as fluorescein, indocyanine green (ICG) or 5-ALA (5-aminolevulinic acid) may be used to mark the tissue or vessel. In other words, the at least one fluorescent material may be at least one fluorescent dye. Fluorescent materials are materials that are excited by light at one wavelength/in a first wavelength band (i.e. their "excitation wavelength"), but emit radiation power in another wavelength band (i.e. their "emission wavelength"). Thus, the one or more second LED-based light sources emit radiation power that has its peak at the excitation wavelength/wavelengths of the fluorescent materials. For typically used fluorescent dyes, the excitation wavelength may be between 390 nm and 420 nm, between 460 nm and 500 nm, or between 780 nm and 810 nm. For example, in an example shown in Figs. 3a and 3b, three different second LED-based light sources are used, having their respective peaks at 405 nm, 480 nm and 788 nm. Accordingly, the one or more second LED-based light sources may be configured to emit radiation power having a peak at one or more of between 390 nm and 420 nm, between 460 nm and 500 nm, and between 780 nm and 810 nm. For example, different light sources of the one or more second LED-based light sources may emit radiation power having a peak at different excitation wavelength/wavelengths of different fluorescent materials. In this case, these different light sources may be controlled mutually independently from each other by the system 190 / one or more processors 194. To avoid the one or more first LED-based light sources drowning out the light emitted by the fluorescent materials, light in the emission wavelength bands of the at least one fluorescent material may be filtered out from the light emitted by the one or more LED-based light sources. In other words, the at least one optical filter may be configured to attenuate or block light having a wavelength (spectrum) that coincides with at least one fluorescence emission wavelength (spectrum) of the at least one fluorescent material. Accordingly, the at least one optical filter may be configured to attenuate or block light within a wavelength band between 490 nm and 560 nm, and/or the at least one optical filter may be configured to attenuate or block light within a wavelength band between 610 nm and 660 nm. The wavelength bands between 490 nm and 560 nm, and between 610 and 660 nm may be emission wavelength bands of common fluorescent dyes. In consequence, the first and second sets of light sources may be used concurrently, and the fluorescence emissions may still be visible, as the corresponding portions of the light emitted by the first group or set is filtered out. Accordingly, the at least one optical filter may be arranged in a light path between the one or more first LED-based light sources and a sample to be perceived through the microscope. Furthermore, the at least one optical filter may be arranged to filter the light emitted by each of the one or more first LED-based light sources, i.e. none of the light emitted by the one or more first lights sources may bypass the at least one optical filter. For example, the at least one optical filter may be a bandpass filter. Alternatively, the at least one optical filter may comprise multiple bandpass filters, one for each of the following wavelength bands: between 490 nm and 560 nm, between 610 nm and 660 nm, and between 750 and 1000 nm. One or more of the above-referenced bandpass filters may be used (or combined), depending on which fluorophore is being used. This can be achieved by e.g. by using a filter wheel, or by arranging different bandpass filters in front of different first LED light sources.

In some embodiments, as further shown in Fig. 5, a third set or group LED-based light sources 183 may be used. In other words, the illumination system 180 may comprise one or more third LED-based light sources 183. The one or more third LED-based light sources may be configured to emit radiation power across the white light color spectrum. Accordingly, the one or more third LED-based light sources may be implemented similar to the one or more first LED-based light sources. The light emitted by third set or group LED-based light sources, however, might not be filtered by the at least one optical filter. Consequently, light emitted by the one or more third LED-based light sources may reach the sample across the (entire) white light color spectrum.

To achieve redundancy and an even illumination of the sample, multiple light sources of each of the groups or sets light sources may be included in the illumination system. For example, the illumination system may comprise two or more first LED-based light sources and two or more second LED-based light sources (and, optionally, two or more third LED-based light sources). In some embodiments, even higher numbers may be used, e.g. four or six first LED-based light sources, four or six first LED-based light sources, and/or four or six third LED-based light sources. In Figs. 5, an example is shown where two first LED-based light sources, six second LED-based light sources and two third LED-based light sources are used. The light sources of each group or set may be arranged at either side of an objective 102 of the microscope. For example, at least one LED-based light source for each wavelength band (e.g. one first LED-based light source, one third LED-based light source, and three second LED-based light sources for three excitation wavelengths of three fluorescent materials, as shown in Fig. 5) may be arranged at either side of the objective. In other words, at least one of the two or more first LED-based light sources and at least one of the two or more second LED-based light sources (and optionally at least one of the two or more third LED-based light sources) may be arranged at a first side of the objective, and at least one of the two or more first LED-based light sources and at least one of the two or more second LED-based light sources (and optionally at least one of the two or more third LED-based light sources) may be arranged at a second side of the objective. For example, the first side and the second side may be opposing sides relative to the objective of the microscope.

The filters being employed with the one or more first LED-based light sources lead to an illumination of the sample (e.g. of the surgical site) that is non-uniform across the white-light spectrum. This non-uniformity may be compensated in image-processing, e.g. by the system 190. Fig. 1c further shows a schematic diagram of an embodiment of the system 190 that is suitable for the microscope. Fig. 1b further shows a system comprising the illumination system 180 and the system 190. The system 190 comprises one or more processors 194 and one or more storage devices 196. Optionally, the system 190 comprises an interface 192. The one or more processors 194 are coupled to the interface 192 and to the one or more storage devices 196. In general, the one or more processors may be configured to provide the functionality of the system 190, e.g. in conjunction with the one or more storage devices and/or in conjunction with the interface.

For example, the system may be configured to obtain image data of an optical imaging sensor 130 of the microscope (e.g. via the interface 192). Accordingly, the system 190 may be coupled to the microscope, e.g. via the interface 192. The image data may represent light reflected by a sample that is illuminated by one or more LED-based light sources. The light emitted by the one or more LED-based light sources is filtered such that light having a wavelength (spectrum) that coincides with at least one fluorescence emission wavelength (spectrum) of the at least one fluorescent material is attenuated or blocked. The system may be configured to process the image data to generate processed image data.

In some embodiments, the system 190, e.g. the one or more processors 194 may be configured to control the one or more first and the one or more second LED-based light sources. Accordingly, the system 190, e.g. the one or more processors 194, may be coupled to the illumination system 180, e.g. via the interface 192.For example, the illumination system may comprise one or more processors 194 (e.g. the system 190) configured to control the one or more first and the one or more second LED-based light sources independent from each other. For example, at least one of an on-off-state and a light intensity may be controlled independently for the one or more first and the one or more second LED-based light sources (and optionally for the one or more third LED-based light sources). More precisely, an on-off-state and/or a light intensity for the one or more first LED-based light sources may be controlled independently from an on-off-state and/or a light intensity for the one or more second LED-based light sources (and optionally from an on-off-state and/or a light intensity for the one or more third LED-based light sources). In some embodiments, each LED-based light source may be controlled independently from each other (or at least independently from LED-based light sources of other groups or sets).

More details and aspects of the illumination system are mentioned in connection with the proposed concept or one or more examples described above or below (e.g. Fig. 1a to 4, 6 to 7). The illumination system may comprise one or more additional optional features corresponding to one or more aspects of the proposed concept or one or more examples described above or below.

Fig. 6 shows a flow chart of an example of a method for imaging an object using a microscope. For example, the microscope may be one of the microscopes shown in connection with Figs. 1a to 4. The method comprises guiding 610 light from an objective of the microscope towards an eyepiece of the microscope using a first light path. The method comprises outputting 620 a visual representation of image data captured by two image sensor assemblies of the microscope. The image data being based on a portion of the light that is guided via the first light path. The method comprises guiding 630 the visual representation of the image data towards the eyepiece using a second light path. The method comprises providing 640 the light guided via the first light path and/or the visual representation of the image data guided via the second light path to the eyepiece.

For example, features introduced in connection with the microscopes and the illumination system of Figs. 1a to 5 may be likewise applied to the corresponding method of Fig. 6.

More details and aspects of the method are mentioned in connection with the proposed concept or one or more examples described above or below (e.g. Fig. 1a to 5, 7). The method may comprise one or more additional optional features corresponding to one or more aspects of the proposed concept or one or more examples described above or below.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

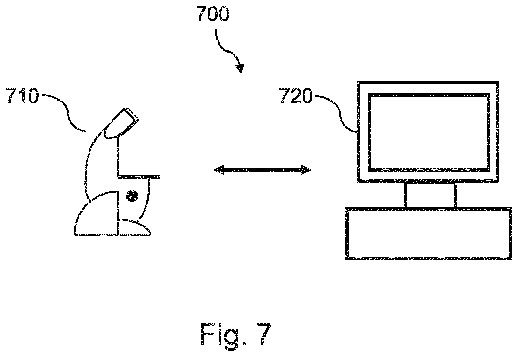

Some embodiments relate to a microscope comprising a system as described in connection with one or more of the Figs. 1 to 6. Alternatively, a microscope may be part of or connected to a system as described in connection with one or more of the Figs. 1 to 6. Fig. 7 shows a schematic illustration of a system 700 configured to perform a method described herein. The system 700 comprises a microscope 710 and a computer system 720. The microscope 710 is configured to take images and is connected to the computer system 720. The computer system 720 is configured to execute at least a part of a method described herein. The computer system 720 may be configured to execute a machine learning algorithm. The computer system 720 and microscope 710 may be separate entities but can also be integrated together in one common housing. The computer system 720 may be part of a central processing system of the microscope 710 and/or the computer system 720 may be part of a subcomponent of the microscope 710, such as a sensor, an actor, a camera or an illumination unit, etc. of the microscope 710.

The computer system 720 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 720 may comprise any circuit or combination of circuits. In one embodiment, the computer system 720 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 720 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 720 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 720 may also include a display device, one or more speakers, and a keyboard and/or controller, which can include a mouse, trackball, touch screen, voice-recognition device, or any other device that permits a system user to input information into and receive information from the computer system 720.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of reference Signs

- 100: Microscope
- 102: Objective
- 104: Eyepiece
- 106: Tube interface
- 110: First light path
- 112: Second light path
- 114: Third light path
- 120: Display device
- 125: Second display device
- 130: Image sensor assembly
- 132: Beam-splitter assembly
- 134-1, 134-2, 134-3: Image sensors
- 136-1, 136-2: Bayer filters
- 140: Optical element / tiltable mirror
- 150: Optical zoom element
- 160: First optical zoom element
- 165: Second optical zoom element
- 170-1, 170-2, 170-3: Reflecting elements
- 180: Illumination system
- 181-1: First LED-based light source(s)
- 181-2: Optical filter
- 182: Second LED-based light source(s)
- 183: Third LED-based light source(s)
- 184: Second optical filter
- 190: System for a microscope
- 192: Interface
- 194: One or more processors
- 196: One or more storage devices
- 200: Microscope
- 300: Microscope
- 400: Microscope
- 610: Guiding light using a first light path
- 620: Outputting a visual representation of image data
- 630: Guiding the visual representation of the image data using a second light path
- 640: Providing the light guided via the first light path or the light guided via the second light path to an eyepiece
- 700: System
- 710: Microscope
- 720: Computer system
- 1000: Microscope system

## Claims

1. A microscope (100; 200; 300; 400; 710) comprising:
a first light path (110) configured to guide light from an objective (102) of the microscope towards an eyepiece (104) of the microscope;
a display device (120) configured to output a visual representation of image data captured by two image sensor assemblies (130) of the microscope, the image data being based on a portion of the light that is guided via the first light path;
a second light path (112) configured to guide the visual representation of the image data towards the eyepiece; and
an optical element (140), configured to provide the light guided via the first light path and/or the visual representation of the image data guided via the second light path to the eyepiece.

2. The microscope according to claim 1, wherein the optical element is a moveable mirror configured to provide either the light guided via the first light path or the visual representation of the image data guided via the second light path to the eyepiece.

3. The microscope according to claim 1, wherein the optical element is a beam splitter configured to provide the visual representation of the image data guided via the second light path overlaid over the light guided via the first light path to the eyepiece.

4. The microscope according to one of the claims 1 to 3, comprising a beam-splitting optical element (135) configured to split a portion of light guided on the first light path off towards the two image sensor assemblies, the two image sensor assemblies being configured to generate the image data based on the portion of the light that is guided towards the two image sensor assemblies via a third light path (114).

5. The microscope according to claim 4, comprising an optical zoom element (150), wherein the optical zoom element is arranged between the beam-splitting optical element and the objective of the microscope in the first light path.

6. The microscope according to claim 5, wherein the optical zoom element is a parfocal optical zoom element,
or wherein the optical zoom element is an afocal optical zoom element.

7. The microscope according to claim 4, comprising a first (160) and a second (165) optical zoom element, wherein the first optical zoom element is arranged between the beam-splitting optical element and the eyepiece of the microscope in the first light path, and wherein the second optical zoom element is arranged between the beam-splitting optical element and the two image sensor assemblies.

8. The microscope according to claim 7, wherein the first optical zoom element is an afocal optical zoom element and wherein the second optical zoom element is a parfocal optical zoom element.

9. The microscope according to one of the claims 4 to 8, wherein the two image sensor assemblies each comprise a beam-splitter assembly and three image sensors, the beam-splitter assembly being configured to guide light of a first spectral portion to the first image sensor, light of a second spectral portion to the second image sensor and light of a third spectral portion to the third image sensor, the three image sensors being configured to generate the image data based on the spectral portions incident to the respective image sensors.

10. The microscope according to one of the claims 4 to 9, comprising a first (170-1), a second (170-2) and a third (170-3) reflecting element, the first reflecting element being arranged to guide the light on the first light path from a substantially vertical direction to a substantially horizontal direction, the second reflecting element being arranged to guide the light on the light path from a substantially horizontal direction to a substantially vertical direction, and the third reflecting element being arranged to guide the light on the light path from a substantially vertical direction to a substantially horizontal direction,
wherein the first light path comprises a first (110-1), second (110-2), third (110-3) and fourth (110-4) portion, wherein the first portion is located between the objective and the first reflecting element, the second portion is located between the first and the second reflecting element, the third portion is located between the second and the third reflecting element and the fourth portion is located between the third reflecting element and the eyepiece, with at least a sub-portion of the second portion and a sub-portion of the fourth portion being arranged in a substantially anti-parallel manner.

11. The microscope according to claim 10, wherein the beam-splitting optical element is arranged in the second or third portion of the first light path.

12. The microscope according to one of the claims 1 to 11, comprising a second display device (125) configured to output a second visual representation of the image data.

13. A microscope system comprising the microscope according to one of the previous claims and a Light Emitting Diode, LED,-based illumination system, the LED-based illumination system being configured to emit radiation power having at least one peak at a wavelength that is tuned to an excitation wavelength of at least one fluorescent material and/or to emit radiation power across a white light spectrum, with the light emitted across the white light spectrum being filtered such that light having a wavelength spectrum that coincides with at least one fluorescence emission wavelength spectrum of the at least one fluorescent material is attenuated or blocked.

14. The microscope system according to claim 13, wherein each LED-based light source of the LED-based illumination system is configured to emit radiation power towards a sample to be observed via the microscope, wherein each LED-based light source is arranged adjacent to the objective of the microscope.

15. A method for imaging an object using a microscope, the method comprising:
guiding (610) light from an objective of the microscope towards an eyepiece of the microscope using a first light path;
outputting (620) a visual representation of image data captured by two image sensor assemblies of the microscope, the image data being based on a portion of the light that is guided via the first light path;
guiding (630) the visual representation of the image data towards the eyepiece using a second light path; and
providing (640) the light guided via the first light path and/or the visual representation of the image data guided via the second light path to the eyepiece.
